# EUROPEAN PATENT APPLICATION

(11) **EP 3 016 424 A1**
(43) Date of publication of application: **04.05.2016**
(21) Application number: 15191828.1
(22) Date of filing: 28.10.2015
(51) Int. Cl.: H04W 12/08, H04L 29/06, H04L 29/08

(54) **APPLICATION DOWNLOAD NOTIFICATION IN HIERARCHICAL GROUPS OF CONSUMER USERS OF MOBILE DEVICES**

(30) Priority: 28.10.2014 GB 201419177
(71) Applicant: Vodafone IP Licensing Limited, The Connection Newbury Berkshire RG14 2FN (GB)
(72) Inventor: Grange, Phil, London, W2 6BY (GB); Kuzubasioglu, Bahar, London, W2 6BY (GB)
(74) Representative: Boult Wade Tennant

(57) **Abstract**

A notification system for a hierarchical group of consumer users of mobile devices in communication with a cellular telecommunications network is described in the application. The notification system comprises a security platform in a core of a cellular telecommunications network, and a secure consumer platform. The secure consumer platform stores: an indication of a Mobile Station International Subscriber Directory Number (MSISDN) for a subscription of each user of the group registered to the cellular telecommunications network; a hierarchical relation between the MSISDNs of one or more parent users of the group of users and the MSISDNs of one or more child users of the group of users; and a security profile for the or each child user of the group of users including an indication of an application download notification flag. The secure consumer platform is configured to signal changes in application download notification flag settings for users to the security platform keyed by MSISDN. The security platform is configured, for MSISDNs for which an application download notification flag is received: to detect application downloads in data traffic in the core network for said MSISDNs; and to cause to be sent to the or each parent user of the MSISDN a notification of the application downloaded to the MSISDN over the cellular telecommunications network.

## Description

### FIELD OF THE INVENTION

The present relates to a notification system and method for a hierarchical group of consumer users of mobile devices in communication with a cellular telecommunications network.

### BACKGROUND

The proliferation of mobile electronic devices, in particular smartphones and tablet devices, has enabled widespread consumer use of these devices to access electronic resources through wireless telecommunications protocols. For example, these devices are commonly used for accessing the World Wide Web using a browser client. In addition, mobile applications, commonly known as "apps", which are computer programs designed specifically with these mobile electronic devices in mind and can access remote resources using the Internet to provide functionality or content to the devices, are commonly downloaded to these devices from application distribution platforms such as Apple Inc.'s App Store, Google's Google Play, Microsoft Corp.'s Windows Phone Store.

To enable access to the Internet for browsing the web or downloading applications from these distribution platforms, the mobile electronic devices are provided with hardware and software to support typically a number of wireless communications protocols to allow data to be exchanged with other computing resources. For example, hardware and software is typically provided to enable communications with wireless access points using Wi-Fi protocols according to the Institute of Electrical and Electronics Engineers' (IEEE) 802.11 standards. In addition, particularly in relation to smart phones, hardware and software is provided to allow the mobile electronic device to wirelessly communicate with mobile cellular telecommunications networks to perform data plane communications in accordance with recognised telecommunications standards such as 2G (including GPRS, GSM, EDGE), 3G (UMTS) and 4G (e.g. LTE or LTE Advanced). For this purpose, a subscriber identity module (SIM) is provided in the smart phone or mobile electronic device to authenticate and identify the user's subscription to the network by a Mobile Station International Subscriber Directory Number (MSISDN). The network operator uses the MSISDN identified to the network by the SIM card to connect voice calls to the device and to establish and maintain data plane connections to the device to send and receive data which may include, for example, email, http requests and return web traffic, served web pages and other data, streaming data including audio and video, downloaded apps, etc.

The ready portability, usability and relatively low cost of these devices now means that users of increasingly young age use them for a variety of purposes including entertainment, social networking and web browsing. Often, parents are providing their children with smartphones or tablets for these purposes. In the past parents would be able to have some degree of monitoring and control over their children's access to sources of entertainment or social interactions, by way of monitoring shared use of computers, phones or access to televisions or movie rentals. However, now that children are provided with direct access to social networks, movies and the Internet via their personal mobile devices, parents are typically less able to monitor and control their children's access to potentially age-inappropriate Internet content, applications and movies.

In the home, children may access the Internet through wireless access points such as wireless routers that provide access to wired broadband services from an Internet Service Provider. Parents may be afforded some degree of control over their children's Internet use in the home by applying safety functionality made available over their wired broadband service by the Internet Service Provider. In this way, children's access to age-inappropriate content on the internet over Wi-Fi can be limited. However, children may attempt to circumvent these controls by instead using their mobile devices to access the Internet via wireless communication with mobile cellular telecommunications networks.

To enable parents to protect their children's exposure to threats on the internet, the mobile cellular telecommunications network provider may provide a security platform that the parents can use to provide a safe internet experience for children connecting to the internet over the cellular 2G/3G/4G network for data transfer. The security platform is provided in the core of the mobile cellular telecommunications network, e.g. by the network provider, and it supports basic and advanced security features for data traffic being routed to and from the devices based on the MSISDN to/from which the data traffic is routed. For example, web content filtering may block a child's access to websites filtered according to a security policy set by the parents for their child's MSISDN subscription. Anti-virus and malware protection may also be provided by the security platform.

Despite this security functionality, greater parental monitoring and control of their children's use of mobile electronic device is desirable.

It is in this context that the present invention is devised.

### SUMMARY OF THE INVENTION

Viewed from one aspect, the present invention provides a notification system for a hierarchical group of consumer users of mobile devices in communication with a cellular telecommunications network, comprising: a security platform in a core of a cellular telecommunications network; and a secure consumer platform storing: an indication of a Mobile Station International Subscriber Directory Number (MSISDN) for a subscription of each user of the group registered to the cellular telecommunications network; a hierarchical relation between the MSISDNs of one or more parent users of the group of users and the MSISDNs of one or more child users of the group of users; and a security profile for the or each child user of the group of users including an indication of an application download notification flag; wherein the secure consumer platform is configured to signal changes in application download notification flag settings for users to the security platform keyed by MSISDN; and wherein the security platform is configured, for MSISDNs for which an application download notification flag is received: to detect application downloads in data traffic in the core network for said MSISDNs; and to cause to be sent to the or each parent user of the MSISDN a notification of the application downloaded to the MSISDN over the cellular telecommunications network.

In accordance with the invention, a hierarchical relationship between parent and child users of a family group may be formed in a secure consumer platform and the child MSISDN may be flagged for the security platform to monitor and notify the parent user's MSISDN of apps downloaded to the child user's electronic device. In this way, the parent user may effectively passively monitor apps downloaded by a child over a mobile cellular telecommunication network by direct detection of the download in the core of the network by a security platform. This can lead to effective detection and notification of the downloads without having to access the child's electronic device, without the child's electronic device being aware or unaware of the monitoring, and is tamper proof from the child's electronic device.

In embodiments, the notification system further comprises the notification system sending to the or each parent user of the MSISDN a notification of the application downloaded to the MSISDN over the cellular telecommunications network by: the security platform being configured to send to the secure consumer platform, on detection of an application download in data traffic in the core network for an MSISDN for which an application download notification flag is received, a notification message indicating the MSISDN and the name of the downloaded application or a URL for the application; and the secure consumer platform being configured, on receipt of the notification message from the secure platform: to search the store of hierarchical relations between MSISDNs for the parent MSISDN of the notified MSISDN; and to cause to be sent to the parent user a notification message indicating at least the child user or MSISDN and the name of the downloaded application or URL for the application.

In embodiments, the secure consumer platform is configured: to store a notification method preference for the or each parent user of the group of users; to create and send the notification message to the parent user by the method indicated by the stored notification method preference for the parent user. In embodiments, the stored notification method preference is selected from an email or SMS, wherein optionally an SMS notification is the default preference.

In embodiments, the downloaded applications are each given a maturity level depending on their age suitability, and wherein the application download notification flag in the stored security profile for the child users indicates a maturity level for the applications above which applications downloaded by child users are to be notified to the parent user. In this way, selective notifications can be provided by the notification system based on the maturity of the child and the app downloaded.

In embodiments, the stored hierarchical relation between the MSISDNs of one or more parent users of the group of users and the MSISDNs of one or more child users of the group of users are generated by: the secure consumer platform being configured to receive from an electronic device of a parent user an indication of the MSISDN of a child user; the secure consumer platform being configured to cause to be sent to the child user an indication that the MSISDN has been indicated as a child in a hierarchical relationship, and optionally to request an acceptance from the child user of the hierarchical relationship.

In embodiments, the hierarchical relationship, application download notification flag and the notification method preference are signalled to the secure consumer platform by a secure platform client software of an electronic device of a parent user configuring said electronic device to be operable to allow the parent user to set the hierarchical relationships with child MSISDNs, application download notification flags and notification method preferences for those relationships.

In embodiments, the secure consumer platform further stores in the security profile for the or each child user of the group of users an indication of a blocked download notification flag; wherein the secure consumer platform is configured to signal changes in the blocked download notification flag settings for users to the security platform keyed by MSISDN; and wherein the security platform is configured, for MSISDNs for which a blocked download notification flag is received: to detect downloads in data traffic in the core network for said MSISDNs blocked by said security platform in accordance with content filtering configured for traffic for said MSISDN; and to cause to be sent to the or each parent user of the MSISDN a notification of the download blocked to the MSISDN by the security platform. In this way, the parent user can be notified of blocked downloads requested by the child user in a similar way to the app download notifications.

Viewed from another aspect, the present invention provides a secure consumer platform for use in a notification system for a hierarchical group of consumer users of mobile devices in communication with a cellular telecommunications network as claimed in any preceding claim, the secure consumer platform being communicatively coupled to a security platform in a core of the cellular telecommunications network as described herein, the secure consumer platform storing: an indication of a Mobile Station International Subscriber Directory Number (MSISDN) for a subscription of each user of the group registered to the cellular telecommunications network; a hierarchical relation between the MSISDNs of one or more parent users of the group of users and the MSISDNs of one or more child users of the group of users; and a security profile for the or each child user of the group of users including an indication of an application download notification flag; wherein the secure consumer platform is configured to signal changes in application download notification flag settings for users to the security platform keyed by MSISDN; and wherein the secured consumer platform is further configured, on receipt from the security platform of a notification message indicating an MSISDN having an application download notification flag and a name of an application detected by the security platform as being downloaded to the MSISDN in the core network or a URL for the downloaded application: to search the store of hierarchical relations between MSISDNs for the parent MSISDN of the notified MSISDN; and to cause to be sent to the parent user a notification message indicating at least the child user or MSISDN and the name of the downloaded application or URL for the application.

Viewed from another aspect, the present invention provides a security platform for use in a notification system for a hierarchical group of consumer users of mobile devices in communication with a cellular telecommunications network as claimed in any preceding claim, the security platform being communicatively coupled to a secure consumer platform as described herein, wherein the security platform is configured: to receive from the secure consumer platform an indication of application download notification flag settings for users keyed by MSISDN; and for MSISDNs for which an application download notification flag is received: to detect application downloads in data traffic in the core network for said MSISDNs; and to cause to be sent to the or each parent user of the MSISDN a notification of the application downloaded to the MSISDN over the cellular telecommunications network.

Viewed from yet another aspect, the present invention provides an electronic device for use by a parent user of a hierarchical group of consumer users of mobile devices in communication with a cellular telecommunications network, comprising secure consumer client software configuring the electronic device: to provide a user interface to the parent user of the electronic device by which the parent user can indicate one or more MSISDNs of child users of the group of consumer users, and set application download notification flags and blocked download notification flags for those child users; and to send to the secure consumer platform one or more datagrams indicating one or more MSISDNs of child users of the group of consumer users, and the application download notification flags and blocked download notification flags set for those child users.

Viewed from yet another aspect, the present invention provides a notification method for a hierarchical group of consumer users of mobile devices in communication with a cellular telecommunications network, comprising: storing, at a secure consumer platform: an indication of a Mobile Station International Subscriber Directory Number (MSISDN) for a subscription of each user of the group registered to the cellular telecommunications network; a hierarchical relation between the MSISDNs of one or more parent users of the group of users and the MSISDNs of one or more child users of the group of users; and a security profile for the or each child user of the group of users including an indication of an application download notification flag; the secure consumer platform signalling changes in application download notification flag settings for users to a security platform in a core of a cellular telecommunications network keyed by MSISDN; and the security platform, for MSISDNs for which an application download notification flag is received: detecting application downloads in data traffic in the core network for said MSISDNs; and causing to be sent to the or each parent user of the MSISDN a notification of the application downloaded to the MSISDN over the cellular telecommunications network.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one aspect or embodiment of the invention are applicable to all aspects or embodiments, unless such features are incompatible.

### BRIEF DESCRIPTION OF THE DRAWINGS

Certain preferred embodiments will now be described, by way of example only, with reference to the accompanying drawings, in which:
Figure 1 shows an example embodiment of a notification system in accordance with aspects of the present invention in the context of a mobile cellular telecommunications network;
Figure 2 is a schematic illustration of components of the embodiment of the notification system shown in Figure 1 including a security platform and a secure consumer platform in communication with a parent user mobile electronic device;
Figure 3 shows a user interface provided to a parent user of the mobile electronic device shown in Figure 2 providing basic application download notification functionality;
Figure 4 shows a user interface provided to a parent user of the mobile electronic device shown in Figure 2 according to another embodiment providing advanced application download notification functionality; and
Figure 5 is a flowchart illustrating a method of operation of a notification system as shown in Figure 1 accordance with an embodiment of aspects of the present invention.

### DETAILED DESCRIPTION OF THE EMBODIMENTS

The detailed description set forth below in connection with the appended drawings is intended as a description of presently preferred embodiments of the invention, and is not intended to represent the only forms in which the present invention may be practised. It is to be understood that the same or equivalent functions may be accomplished by different embodiments that are intended to be encompassed within the spirit and scope of the invention. Furthermore, terms "comprises," "comprising," or any other variation thereof, are intended to cover a non-exclusive inclusion, such that apparatuses and method steps that comprises a list of elements or steps does not include only those elements but may include other elements or steps not expressly listed or inherent. An element or step proceeded by "comprises ...a" does not, without more constraints, preclude the existence of additional identical elements or steps that comprises the element or step.

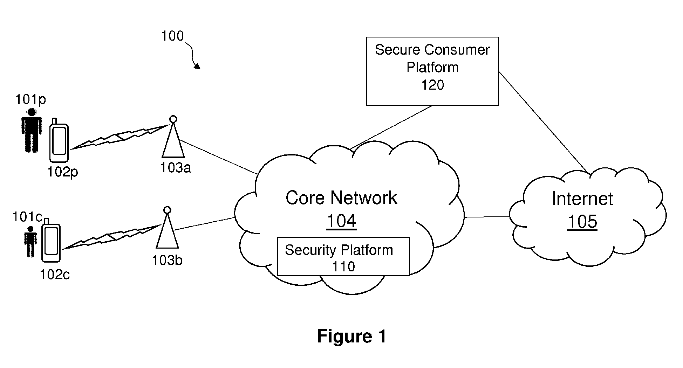

Reference will now be made to Figure 1, which shows a notification system 100 in accordance with an example embodiment of an aspect of the present invention. The notification system 100 comprises a secure consumer platform 120 in communication with a security platform 110 provided in a core 104 of a mobile cellular telecommunications network which may be a GPRS, UMTS or LTE network. A radio access network comprising plural base stations 103a, 103b provides an air interface for communication with user equipment or mobile electronic devices 102p, 102c by establishing radio bearers therebetween. The mobile electronic devices may be tablets, laptops, or as in this case, smartphones, or another appropriate electronic device for connecting to the mobile cellular telecommunications network to allow a user data communication with the Internet therethrough. The radio bearers allow users 101 p, 101 c of the mobile electronic devices 102p, 102c to engage in voice communications with other nodes in a public switched telephone network (PSTN), not shown, via a core network 104 and to engage in data communications with computer resources and other nodes and electronic devices accessible on the Internet 105 via a connection through core network 104.

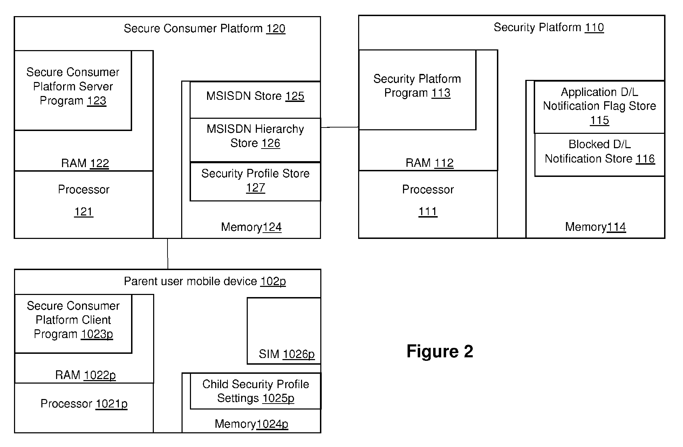

Referring now also to Figure 2, a subscriber identity module (SIM) 1026 is removably inserted into an electronic device (e.g. 102p, a smart phone). The SIM 1026 carries a Mobile Station International Subscriber Directory Number (MSISDN) usable to authenticate and uniquely identify a subscription of a user to voice and data communications services provided over mobile cellular telecommunications network by the network provider. The MSISDN functions as a global title for routing data and voice communications in the core network 104 to the electronic device 102p carrying the SIM 1026. In this way, a user 101p of an electronic device 102p may, using a browser program stored in a memory 1024 of the electronic device 102p, send a data request via the core 104 of the mobile cellular telecommunications network to a web server via the Internet 105 located by a uniform resource locator (URL) to serve to the electronic device 102p content constructed by Hypertext Markup Language (HTML) as a website. The core network 104 routes the content of the website to the electronic device 102p using the MSISDN of the SIM 1026 where it is displayed in a graphical user interface of the browser on a display screen thereof (not shown). Similarly, a user 101p may operate the electronic device 102p to request a mobile application distribution platform such as Apple Inc.'s App Store, Google's Google Play, Microsoft Corp.'s Windows Phone Store accessible through the Internet 104 to download to the electronic device 102p a mobile application (commonly known as an "app"). Again, the app is downloaded to the electronic device 102p using the mobile cellular telecommunications network by the core network 104 routing the app download to the device 102p on the basis of the MSISDN of the user's subscription.

In a consumer family context, a parent user 101p may provide a child 101 c with an electronic device 102c for his or her personal use. To provide the child user 101 c with voice and data connectivity using mobile cellular telecommunications network, the parent user 101p may provide the child user 101 c with a subscription from the mobile cellular telecommunications network service provider for voice and data communications therethrough. For this, the child electronic device 102c, like the parent electronic device 102p, carries a SIM (not shown) having an associated MSISDN to authenticate and uniquely identify the child user's 101 c subscription to enable voice and data communications to be routed to the device 102c.

To provide a degree of monitoring and control in particular of data traffic to be routed to subscribers to data services provided by the mobile cellular telecommunications network provider, the security platform 110 is provided in the core network 104 to carry out security controls on data traffic in the core network 104 received from/to be sent to the user electronic devices 102p, 102c based on the MSISDN of the users. The security platform 110 is provided as a server that is configured by a security platform programme 113 instantiated in the RAM 112 to cause the processor 111 to perform security operations on data traffic in the core network 104 based on the MSISDN to which that traffic is to be routed. The security operations may include content filtering, anti-virus and malware filtering, harmful website protection (e.g. anti-phishing), etc.

To set the security operations that are to be performed by security platform 110 for a given user's data traffic in the core network 104, the secure consumer platform 120 maintains in memory 124 a security profile for that user in security profile store 127. For each user, the security profile indicates the security settings and filters to be applied for that user by the security platform 110. In order to set the security settings for a given user, the user mobile device 102p is provided with a secure consumer platform client program 1023 instantiated in RAM 1022 that configures the processor 1021 to provide to the user 101p of the electronic device 102p a graphical user interface displayed on a display thereof (not shown) having a number of user-manipulateable widgets and controls by which the security settings for that user can be chosen. The secure consumer platform client program 1023 then signals changes in the security settings to the secure consumer platform 120 by means of data communications through the core network 104 and optionally also through the Internet 105 were a secure consumer platform server program 123 instantiated in RAM 122 thereof configures the processor to update the security profile for the user 101p stored in the security profile store 127. These security profile settings for the user 101p are then signalled to the security platform 110 which applies the security filters accordingly to data traffic to be sent to that user 101 p.

In the context of the consumer family, the secure consumer platform client and server programs 1023, 123 allow the parent user 101p to set the security profile settings for the child user 101 c using the parent user's mobile device 102p. This allows the parent user 101p to exert a degree of control over the child users 101 c security and ability to access to unsuitable data content on the Internet 105 over the mobile cellular telecommunications network using the functionality of the security platform 110 provided in the core network 104.

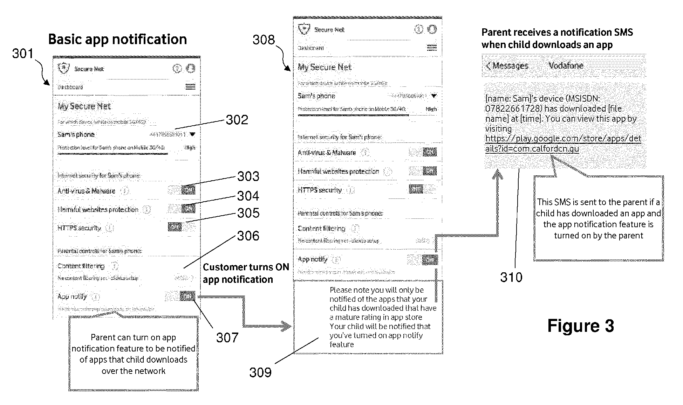

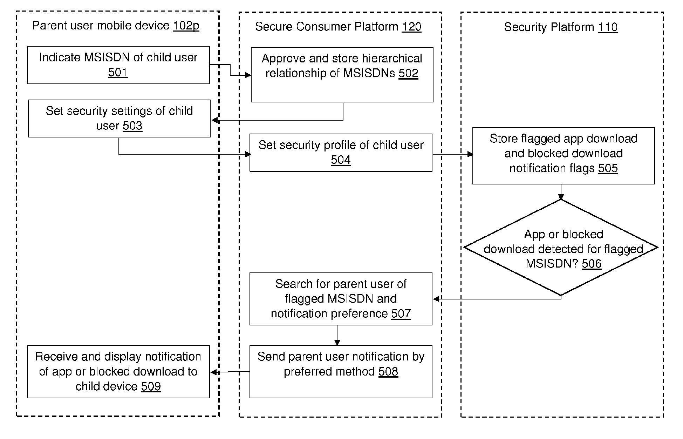

A graphical user interface provided on the display of the parent user's mobile device 102p for setting the security profile of the child user's data subscription is shown in Figure 3. The process by which this operates in conjunction with the system 100 to provide the security control and notification system for the child user's device 102c will be described with reference to Figure 5.

First, in step 501, the parent user 101p operates the mobile device 102p to indicate the MSISDN of the child user's 101p subscription to the mobile cellular telecommunications network. The MSISDN can be generated based on the child users telephone number input into the device 102p by the parent 101 p. The secure consumer platform client program 1023 then causes the mobile device 102p to send the MSISDN of the child user to the secure consumer platform 120.

In step 502, the secure consumer platform 120, having received the MSISDN of the child user 101 c is caused by the secure consumer platform server program 123 to initiate an approval process for the hierarchical relationship between the MSISDN of the parent user 101p the MSISDN of the child user 101 c. For reasons of brevity, this approval process is not shown in detail here but typically a message requesting an approval of the hierarchical relationship is sent by the secure consumer platform 120 to the MSISDN of the child user 101 c, and on receiving the message at the child user's device 102c, the child user 101 c can confirm the hierarchical relationship by replying to the message. Once the hierarchical relationship has been approved, the secure consumer platform 120 can store the hierarchical relationship between the MSISDNs of the parent user and the child user in the MSISDN hierarchy store 126 in memory 124. The secure consumer platform 120 already has an MSISDN store 125 in the memory 124 in which the MSISDN for the subscription of each user 101 p, 101 c in a family group is stored. The MSISDN hierarchy store 126 may simply store the relationship between the MSISDNs contained in MSISDN store 125 by reference to the entries in store as related parent and child MSISDNs. Hierarchical relationships between MSISDNs may be generated between a parent MSISDN and more than one child MSISDN. Typically only a single parent MSISDN is indicated as a "security administrator" for the family group of users, although it is in principle possible to have more than one parent user acting as joint security administrators.

Proceeding to step 503, once the hierarchical relationship between the parent user 101p and child user 101 c has been stored in the secure consumer platform 120, the secure consumer platform client program 1023 displays the graphical user interface (GUI) 301 shown on the left-hand side of Figure 3. Here, the graphical user interface 301 shows a security dashboard for the child user 101 c, "Sam's phone" having its MSISDN indicated the GUI at 302. Where more than one child user's MSISDN is hierarchically associated with the parent user 101 p, a drop-down menu control is provided to allow the parent user 101p to select between the security dashboard for the different child users. The child user's security profile settings for the security platform filtering of antivirus and malware can be switched on and off using the control 303, the filtering of harmful websites (e.g. anti-phishing filtering) can be turned on and off using the control 304, HTTPS security for data communications can be switched on and off using the control 305, and content filtering settings for the child user can be set using the controls 306.

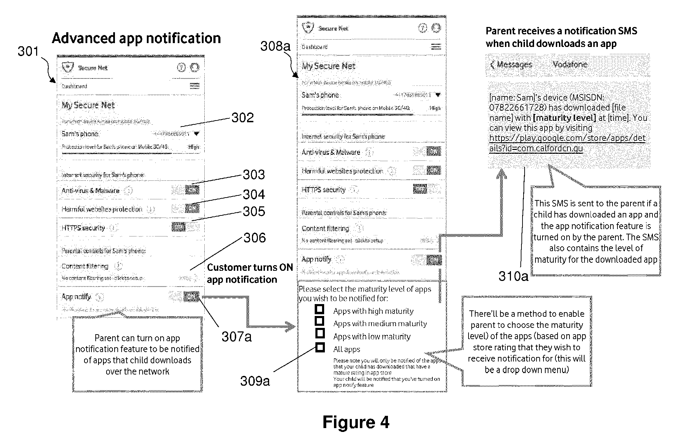

A further control 307 is provided to allow the parent user 101p to turn on and off app download notification functionality for the child user 101 c. On turning on the app download notification control 307 as shown in the GUI 301, the user is provided with a message 309 as shown in GUI 308 informing the parent user 101p that the notification of a downloaded app will only be sent if the child user 101 c has downloaded an app that has a mature rating in an app distribution platform (i.e. app store). Alternatively, as shown in Figure 4, in which, for brevity, like numbers denote like features, more advanced app download notification functionality may be provided by which, on turning on the app download notification control 307a, further controls 309a are provided in the GUI shown in 308a that allow the parent user to select one of a number of different indicated maturity levels of app for which the notification system 100 is to issue download notifications to the parent user's device. For example, the parent user may select to be notified of all apps downloaded by the child user, or only apps rated as having a low maturity or higher, and so on.

Although not shown in either Figure 3 or Figure 4, a further control may be provided to allow the parent user 101p to select to be notified of any downloads to the child electronic device 102c requested by the child user 101 c and blocked by the security platform 110 by virtue of the security or content filtering for the child user 101 c.

Further controls, not shown, may also be provided to allow the parent user 101p to select a preferred notification method from an SMS message or an email to an indicated email address for notifications of downloaded apps or blocked downloads to the child user 101 c.

Once the security settings and notification preferences for the child user 101 c have been set by the parent user 101p in step 503, these security settings are sent by the parent user mobile device 102p to the secure consumer platform 120. Here, in step 504, the secure consumer platform server program 123 configures and stores the security profile for the child user 101 c in the security profile store 127 in memory 124.

Specifically, in relation to the app download and blocked download notification settings for the security profile of the child user 101 c, in step 505 any changes therein are signalled by the secure consumer platform 120 to the security platform 110 by means of flagging MSISDNs for which app download and blocked download notification has been turned on. These flagged MSISDNs are then stored by the security platform 110 in app download notification flag store 115 and blocked download notifications flag store 116, respectively.

Then, in step 506, the security platform 110 performs a looped query as to whether an app or a blocked download has been detected in the this traffic in the core network 104 to be routed to an MSISDN in which an app download or a blocked download flag has been stored at step 505. Only when such an app (having the flagged maturity level) or a blocked download is detected for a flagged MSISDN (e.g. of the MSISDN of the child user "Sam" 101 c) at step 506 does the security platform 110 send to the secure consumer platform 120 an indication of the MSISDN and the downloaded app (including the maturity level) or the blocked download and a related URL.

Step 507, receiving from the security platform 110 the flagged MSISDN, the secure consumer platform 120 searches the MSISDN store 125 and the MSISDN hierarchy store 126 for the MSISDN of the parent user 101p and any preferred notification method.

Then, in step 508, the secure consumer platform 120 causes a message to be sent to the parent user by the preferred or default notification method indicating that the child user 101 c has downloaded an app or has had a requested download blocked by the security platform 110. The default notification method is an SMS message that the secure consumer platform may instruct a messaging platform (not shown) to prepare and send to the MSISDN of the parent user 101p over the mobile cellular telecommunications network. This is then received and displayed at the parent user mobile device 102p in step 509. An example message notifying the parent user 101p of an app downloaded by child user 101 c is shown in Figure 3 at 310 which indicates that the child user's device 102c having the child user's MSISDN has downloaded an app having a given name at a given time, with the URL for viewing this app being hyperlinked within the message. A more advanced message indicating the maturity level of the app is shown at 310a in Figure 4. Alternatively, if the parent user 101p had indicated a notification preference of an email, at step 508, the secure consumer platform 120 would instruct an email server (not shown) to prepare and send to an email address indicated by the parent user 101 p an email notification of the downloaded app or the blocked download having a content similar to the SMS messages shown in Figures 3 and 4.

The description of the preferred embodiments of the present invention has been presented for purposes of illustration and description, but is not intended to be exhaustive or to limit the invention to the forms disclosed. It will be appreciated by those skilled in the art that changes could be made to the embodiments described above without departing from the broad inventive concept thereof. It is understood, therefore, that this invention is not limited to the particular embodiment disclosed, but covers modifications within the scope of the present invention as defined by the appended claims.

## Claims

1. A notification system for a hierarchical group of consumer users of mobile devices in communication with a cellular telecommunications network, comprising:
a security platform in a core of a cellular telecommunications network; and
a secure consumer platform storing:
an indication of a Mobile Station International Subscriber Directory Number (MSISDN) for a subscription of each user of the group registered to the cellular telecommunications network;
a hierarchical relation between the MSISDNs of one or more parent users of the group of users and the MSISDNs of one or more child users of the group of users; and
a security profile for the or each child user of the group of users including an indication of an application download notification flag;
wherein the secure consumer platform is configured to signal changes in application download notification flag settings for users to the security platform keyed by MSISDN; and
wherein the security platform is configured, for MSISDNs for which an application download notification flag is received:
to detect application downloads in data traffic in the core network for said MSISDNs; and
to cause to be sent to the or each parent user of the MSISDN a notification of the application downloaded to the MSISDN over the cellular telecommunications network.

2. A notification system as claimed in claim 1, further comprising the notification system sending to the or each parent user of the MSISDN a notification of the application downloaded to the MSISDN over the cellular telecommunications network by:
the security platform being configured to send to the secure consumer platform, on detection of an application download in data traffic in the core network for an MSISDN for which an application download notification flag is received, a notification message indicating the MSISDN and the name of the downloaded application or a URL for the application; and
the secure consumer platform being configured, on receipt of the notification message from the secure platform:
to search the store of hierarchical relations between MSISDNs for the parent MSISDN of the notified MSISDN; and
to cause to be sent to the parent user a notification message indicating at least the child user or MSISDN and the name of the downloaded application or URL for the application.

3. A notification system as claimed in claim 2, wherein the secure consumer platform is configured:
to store a notification method preference for the or each parent user of the group of users;
to create and send the notification message to the parent user by the method indicated by the stored notification method preference for the parent user.

4. A notification system as claimed in claim 3, wherein the stored notification method preference is selected from an email or SMS, wherein optionally an SMS notification is the default preference.

5. A notification system as claimed in any preceding claim, wherein the downloaded applications are each given a maturity level depending on their age suitability, and wherein the application download notification flag in the stored security profile for the child users indicates a maturity level for the applications above which applications downloaded by child users are to be notified to the parent user.

6. A notification system as claimed in any preceding claim, wherein the stored hierarchical relation between the MSISDNs of one or more parent users of the group of users and the MSISDNs of one or more child users of the group of users are generated by:
the secure consumer platform being configured to receive from an electronic device of a parent user an indication of the MSISDN of a child user;
the secure consumer platform being configured to cause to be sent to the child user an indication that the MSISDN has been indicated as a child in a hierarchical relationship, and optionally to request an acceptance from the child user of the hierarchical relationship.

7. A notification system as claimed in any of claims 3 to 7, wherein the hierarchical relationship, application download notification flag and the notification method preference are signalled to the secure consumer platform by a secure platform client software of an electronic device of a parent user configuring said electronic device to be operable to allow the parent user to set the hierarchical relationships with child MSISDNs, application download notification flags and notification method preferences for those relationships.

8. A notification system as claimed in any preceding claim, wherein the secure consumer platform further stores in the security profile for the or each child user of the group of users an indication of a blocked download notification flag;
wherein the secure consumer platform is configured to signal changes in the blocked download notification flag settings for users to the security platform keyed by MSISDN; and
wherein the security platform is configured, for MSISDNs for which a blocked download notification flag is received:
to detect downloads in data traffic in the core network for said MSISDNs blocked by said security platform in accordance with content filtering configured for traffic for said MSISDN; and
to cause to be sent to the or each parent user of the MSISDN a notification of the download blocked to the MSISDN by the security platform.

9. A secure consumer platform for use in a notification system for a hierarchical group of consumer users of mobile devices in communication with a cellular telecommunications network as claimed in any preceding claim, the secure consumer platform being communicatively coupled to a security platform in a core of the cellular telecommunications network as claimed in claim 10, the secure consumer platform storing:
an indication of a Mobile Station International Subscriber Directory Number (MSISDN) for a subscription of each user of the group registered to the cellular telecommunications network;
a hierarchical relation between the MSISDNs of one or more parent users of the group of users and the MSISDNs of one or more child users of the group of users; and
a security profile for the or each child user of the group of users including an indication of an application download notification flag;
wherein the secure consumer platform is configured to signal changes in application download notification flag settings for users to the security platform keyed by MSISDN; and
wherein the secured consumer platform is further configured, on receipt from the security platform of a notification message indicating an MSISDN having an application download notification flag and a name of an application detected by the security platform as being downloaded to the MSISDN in the core network or a URL for the downloaded application:
to search the store of hierarchical relations between MSISDNs for the parent MSISDN of the notified MSISDN; and
to cause to be sent to the parent user a notification message indicating at least the child user or MSISDN and the name of the downloaded application or URL for the application.

10. A security platform for use in a notification system for a hierarchical group of consumer users of mobile devices in communication with a cellular telecommunications network as claimed in any preceding claim, the security platform being communicatively coupled to a secure consumer platform as claimed in claim 9, wherein the security platform is configured:
to receive from the secure consumer platform an indication of application download notification flag settings for users keyed by MSISDN; and
for MSISDNs for which an application download notification flag is received:
to detect application downloads in data traffic in the core network for said MSISDNs; and
to cause to be sent to the or each parent user of the MSISDN a notification of the application downloaded to the MSISDN over the cellular telecommunications network.

11. An electronic device for use by a parent user of a hierarchical group of consumer users of mobile devices in communication with a cellular telecommunications network, comprising secure consumer client software configuring the electronic device:
to provide a user interface to the parent user of the electronic device by which the parent user can indicate one or more MSISDNs of child users of the group of consumer users, and set application download notification flags and blocked download notification flags for those child users; and
to send to the secure consumer platform one or more datagrams indicating one or more MSISDNs of child users of the group of consumer users, and the application download notification flags and blocked download notification flags set for those child users.

12. A notification method for a hierarchical group of consumer users of mobile devices in communication with a cellular telecommunications network, comprising:
storing, at a secure consumer platform:
an indication of a Mobile Station International Subscriber Directory Number (MSISDN) for a subscription of each user of the group registered to the cellular telecommunications network;
a hierarchical relation between the MSISDNs of one or more parent users of the group of users and the MSISDNs of one or more child users of the group of users; and
a security profile for the or each child user of the group of users including an indication of an application download notification flag;
the secure consumer platform signalling changes in application download notification flag settings for users to a security platform in a core of a cellular telecommunications network keyed by MSISDN; and
the security platform, for MSISDNs for which an application download notification flag is received:
detecting application downloads in data traffic in the core network for said MSISDNs; and
causing to be sent to the or each parent user of the MSISDN a notification of the application downloaded to the MSISDN over the cellular telecommunications network.
